# EUROPEAN PATENT APPLICATION

(11) **EP 3 876 333 A1**
(43) Date of publication of application: **08.09.2021**
(21) Application number: 19878380.5
(22) Date of filing: 29.10.2019
(51) Int. Cl.: H01M 10/42, H02J 7/00

(54) **BATTERY ENERGY STORAGE BMS SYSTEM ENABLING DUAL PATH-BASED INFORMATION SAMPLING AND DETECTION AND PROTECTION CONTROL**

(30) Priority: 30.10.2018 CN 201811272118; 30.10.2018 CN 201821763260 U
(71) Applicant: IPS Technology Group Limited, Jiangning District Nanjing, Jiangsu 211135 (CN)
(72) Inventor: ZHOU, Xiwei, Beijing 100102 (CN)
(74) Representative: Engelhard, Markus
(86) International application number: PCT/CN2019/113994
(87) International publication number: WO 2020/088449

(57) **Abstract**

The present invention relates to the technical field of electrochemical battery energy storage system applications, and particularly relates to a battery energy storage BMS system enabling dual path-based information sampling and detection and protection control. Each battery module unit cell detection and sampling module of a battery string monitoring management module in a battery string direct current bus and string balancing management control device acquires electrical parameters, such as voltage, current, and electric quantity, and a temperature parameter of each battery string and all battery cells in real-time, and compares the same against pre-configured operation assurance parameters of an energy storage system so as to perform string-level electrical energy balancing. Upon detecting that a parameter of a unit battery has reached a preset hazardous state parameter range, a corresponding battery module unit cell detection and sampling module directly drives a corresponding battery string direct current power line connection/disconnection and protection circuit to disconnect a power path connecting a corresponding battery string to a battery string direct current busbar. The present invention saves investment costs while significantly improving controllability and safety of the energy storage system.

## Description

### BACKGROUND

### Technical Field

The present invention relates to the technical field of electrochemical battery energy storage system applications, and particularly relates to a battery energy storage BMS system enabling dual path-based information sampling and detection and protection control.

### Related Art

A battery energy storage system is an important constituent of electric vehicle new energy power and smart grid and energy internet. In particular, in an electrochemical battery energy storage system, a battery string formed by multiple unit battery cells connected to each other is connected to an energy storage converter equipment for charging and discharging, and is controlled to complete power regulation and charging and discharging. Due to the certain differences in the physical and chemical properties of the battery cells and differences in environmental dimensions during installation and operation, the inconsistencies in the voltage and electric quantity of the batteries in the battery string affect the overall efficiency and utilization of the battery string and also bring safety hazards.

Therefore, the real-time monitoring of battery operation, the control of charging and discharging currents, and the consistent balancing and control of electrical parameters such as voltage and electric quantity of the battery cells in the battery string are key to the safe, sound and efficient operation of the energy storage system. For most of large-scale energy storage systems that use a huge number of battery cells, a battery module management unit (BMU) for detecting battery cell information in a battery module, a battery cluster management unit (BCMS), and a battery array management system (BAMS) for monitoring the battery system are adopted. That is to say, the system is divided into three levels for management and control. A battery module unit cell detection and sampling module is responsible for the real-time monitoring of battery status parameters and signal acquisition. The upper-level BCMS processes the battery cluster, module and cell statuses (voltage, voltage, current, temperature, SOC, etc.), and provides safety management during the charging and discharging process. Because the BMU does not have the ability to detect and drive the connection/disconnection of the corresponding battery string direct current power line, dangerous situations of batteries cannot be handled in time, which greatly increases the possibility of occurrence of severe incidents. In addition, most of existing BMSs perform real-time monitoring and real-time static or dynamic electrical energy balancing on each battery cell and each battery pack formed by multiple battery cells connected in parallel. For each battery cell and each battery pack formed by multiple battery cells connected in parallel, a balancing electronic circuit and current loop are configured. A 1 MWH battery energy storage system is equipped with thousands of balancing electronic circuits and current loops, which not only greatly increases the investment costs, but also causes immeasurable risks to the energy storage system due to the huge number of balancing electronic circuits and current loops.

### SUMMARY

To solve the defects of the prior art in battery management of an energy storage system and improve the safety while saving investment costs, the present invention provides a battery energy storage BMS system enabling dual path-based information sampling and detection and protection control, mainly including: a battery string direct current bus and string balancing management control device, a battery string monitoring management module, an upper computer communication line, a bidirectional energy storage converter communication line, a bidirectional energy storage converter, a battery string direct current busbar, a bidirectional energy storage converter alternating current power line, a battery string monitoring management module sampling and control information bus, a power grid, an energy storage system upper computer, a first battery string first battery module, a first battery string second battery module, a first battery string m-th battery module, a first battery string first battery module unit cell detection and sampling module, a first battery string second battery module unit cell detection and sampling module, a first battery string m-th battery module unit cell detection and sampling module, a first battery string first battery module information acquisition wiring harness, a first battery string second battery module information acquisition wiring harness, a first battery string m-th battery module information acquisition wiring harness, a first battery string direct current power line, a first battery string direct current power line connection/disconnection and protection circuit, a first battery string fast protection control path, a second battery string first battery module, a second battery string second battery module, a second battery string m-th battery module, a second battery string first battery module unit cell detection and sampling module, a second battery string second battery module unit cell detection and sampling module, a second battery string m-th battery module unit cell detection and sampling module, a second battery string first battery module information acquisition wiring harness, a first battery string second battery module information acquisition wiring harness, a second battery string m-th battery module information acquisition wiring harness, a second battery string direct current power line, a second battery string direct current power line connection/disconnection and protection circuit, a second battery string fast protection control path, an N-th battery string first battery module, an N-th battery string second battery module, an N-th battery string m-th battery module, an N-th battery string first battery module unit cell detection and sampling module, an N-th battery string second battery module unit cell detection and sampling module, an N-th battery string m-th battery module unit cell detection and sampling module, an N-th battery string first battery module information acquisition wiring harness, an N-th battery string second battery module information acquisition wiring harness, an N-th battery string m-th battery module information acquisition wiring harness, an N-th battery string direct current power line, an N-th battery string direct current power line connection/disconnection and protection circuit, and an N-th battery string fast protection control path, where
the first battery string direct current power line connection/disconnection and protection circuit, the second battery string direct current power line connection/disconnection and protection circuit, the N-th battery string direct current power line connection/disconnection and protection circuit, the battery string direct current busbar, and the battery string monitoring management module are mounted in a cabinet and form the battery string direct current bus and string balancing management control device to perform battery string electrical energy balancing and safety protection connection/disconnection control;
positive and negative electrodes of every neighboring two of the first battery string first battery module, the first battery string second battery module, and the first battery string m-th battery module are connected in series to form a first battery string;
positive and negative electrodes of every neighboring two of the second battery string first battery module, the second battery string second battery module, and the second battery string m-th battery module are connected in series to form a second battery string;
positive and negative electrodes of every neighboring two of the N-th battery string first battery module, the N-th battery string second battery module, and the N-th battery string m-th battery module are connected in series to form an N-th battery string;
the first battery string first battery module unit cell detection and sampling module, the first battery string second battery module unit cell detection and sampling module, and the first battery string m-th battery module unit cell detection and sampling module are respectively connected to every corresponding unit battery in the first battery string first battery module, the first battery string second battery module, and the first battery string m-th battery module by the first battery string first battery module information acquisition wiring harness, the first battery string second battery module information acquisition wiring harness, and the first battery string m-th battery module information acquisition wiring harness, are connected to the battery string monitoring management module by the battery string monitoring management module sampling and control information bus to form an information sampling and detection communication path for all unit batteries in the first battery string, and are connected to the first battery string direct current power line connection/disconnection and protection circuit by the first battery string fast protection control path to form a real-time monitoring and fast protection direct drive control path for the first battery string;
the second battery string first battery module unit cell detection and sampling module, the second battery string second battery module unit cell detection and sampling module, and the second battery string m-th battery module unit cell detection and sampling module are respectively connected to every corresponding unit battery in the second battery string first battery module, the second battery string second battery module, and the second battery string m-th battery module by the second battery string first battery module information acquisition wiring harness, the second battery string second battery module information acquisition wiring harness, and the second battery string m-th battery module information acquisition wiring harness, are connected to the battery string monitoring management module by the battery string monitoring management module sampling and control information bus to form an information sampling and detection communication path for all unit batteries in the second battery string, and are connected to the second battery string direct current power line connection/disconnection and protection circuit by the second battery string fast protection control path to form a real-time monitoring and fast protection direct drive control path for the second battery string;
the N-th battery string first battery module unit cell detection and sampling module, the N-th battery string second battery module unit cell detection and sampling module, and the N-th battery string m-th battery module unit cell detection and sampling module are respectively connected to every corresponding unit battery in the N-th battery string first battery module, the N-th battery string second battery module, and the N-th battery string m-th battery module by the N-th battery string first battery module information acquisition wiring harness, the N-th battery string second battery module information acquisition wiring harness, and the N-th battery string m-th battery module information acquisition wiring harness, are connected to the battery string monitoring management module by the battery string monitoring management module sampling and control information bus to form an information sampling and detection communication path for all unit batteries in the N-th battery string, and are connected to the N-th battery string direct current power line connection/disconnection and protection circuit by the N-th battery string fast protection control path to form a real-time monitoring and fast protection direct drive control path for the N-th battery string;
the first battery string is connected to the first battery string direct current power line connection/disconnection and protection circuit by the first battery string direct current power line, and is connected from the first battery string direct current power line connection/disconnection and protection circuit sequentially through the battery string direct current busbar, the bidirectional energy storage converter, and the bidirectional energy storage converter alternating current power line, to the power grid to form a power path for charging and discharging of the first battery string;
the second battery string is connected to the second battery string direct current power line connection/disconnection and protection circuit by the second battery string direct current power line, and is connected from the second battery string direct current power line connection/disconnection and protection circuit sequentially through the battery string direct current busbar, the bidirectional energy storage converter, and the bidirectional energy storage converter alternating current power line, to the power grid to form a power path for charging and discharging of the second battery string;
the N-th battery string is connected to the N-th battery string direct current power line connection/disconnection and protection circuit by the N-th battery string direct current power line, and is connected from the N-th battery string direct current power line connection/disconnection and protection circuit sequentially through the battery string direct current busbar, the bidirectional energy storage converter, and the bidirectional energy storage converter alternating current power line, to the power grid to form a power path for charging and discharging of the N-th battery string;
the battery string monitoring management module is respectively connected to the first battery string first battery module unit cell detection and sampling module, the first battery string second battery module unit cell detection and sampling module, the first battery string m-th battery module unit cell detection and sampling module, the second battery string first battery module unit cell detection and sampling module, the second battery string second battery module unit cell detection and sampling module, the second battery string m-th battery module unit cell detection and sampling module, the N-th battery string first battery module unit cell detection and sampling module, the N-th battery string second battery module unit cell detection and sampling module, the N-th battery string m-th battery module unit cell detection and sampling module, the first battery string direct current power line connection/disconnection and protection circuit, the second battery string direct current power line connection/disconnection and protection circuit, and the N-th battery string direct current power line connection/disconnection and protection circuit by the battery string monitoring management module sampling and control information bus, to form a communication link for real-time monitoring of each battery string and all battery cells in the entire energy storage system and management and control of battery string electrical energy balancing;
the battery string monitoring management module is connected to the bidirectional energy storage converter by the bidirectional energy storage converter communication line to form an auxiliary control link for the battery string monitoring management module to manage and control the bidirectional energy storage converter to perform power regulation in battery charging and discharging and battery string electric quantity balancing;
the energy storage system upper computer is connected to the battery string monitoring management module by the upper computer communication line, to form a regulation communication link for the energy storage system upper computer to use the battery string monitoring management module to monitor and control the battery string charging and discharging in real-time; and
the energy storage system upper computer is connected to the bidirectional energy storage converter by the upper computer communication line, to form a control link for the energy storage system upper computer to regulate charging and discharging of the bidirectional energy storage converter.

A method for controlling operation of a battery energy storage BMS system enabling dual path-based information sampling and detection and protection control is as follows:
[1] in a process in which a battery energy storage BMS system enabling dual path-based information sampling and detection and protection control is powered on and operates, each battery module unit cell detection and sampling module of a battery string monitoring management module in a battery string direct current bus and string balancing management control device and an energy storage system upper computer simultaneously monitoring each battery string and all battery cells in real time;
[2] when the BMS system is abnormal, giving an alarm and stopping running;
[3] when the BMS system is normal and each battery module unit cell detection and sampling module detects that parameters of one or more unit batteries do not reach a preset hazardous state parameter range, performing [4]; otherwise, the corresponding battery module unit cell detection and sampling module implementing, through the corresponding battery string direct current power line connection/disconnection and protection circuit connected to the corresponding battery string fast protection control path, control and immediately disconnecting a power path connecting the corresponding battery string to the battery string direct current busbar so that the power path of the corresponding battery string is in a disconnected and maintenance state, at the same time, the corresponding battery module unit cell detection and sampling module giving corresponding alarm information, and when the parameter of the corresponding unit battery no longer falls within the preset hazardous state parameter range, performing [4];
[4] each battery module unit cell detection and sampling module of the battery string monitoring management module in the battery string direct current bus and string balancing management control device monitoring, in real-time, information parameters including a voltage, current, temperature and a calculated stored electric quantity of each battery string and all the battery cells in the energy storage system, comparing consistency between the parameters of the battery cells of the battery strings, comparing the information parameters against pre-configured operation assurance parameters of the energy storage system, and when detecting that the pre-configured operation assurance parameters of the energy storage system are not met, giving alarm information to a bidirectional energy storage converter and the energy storage system upper computer, and at the same time controlling, according to a parameter condition set by the energy storage system, connection/disconnection of the corresponding battery string direct current power line connection/disconnection and protection circuit in the battery string direct current bus and string balancing management control device and correspondingly regulating charging and discharging powers of the bidirectional energy storage converter;
[5] when the pre-configured operation assurance parameters of the energy storage system are met, the energy storage system upper computer monitoring in real-time, according to a power demand of the power grid and by using the battery string monitoring management module in the battery string direct current bus and string balancing management control device and each battery module unit cell detection and sampling module, real-time information parameters of each battery string and all the battery cells in the energy storage system and controlling the charging and discharging powers of the bidirectional energy storage converter according to regulation policy preset by the energy storage system, where [6] is performed in a case of charging and [7] is performed in a case of discharging;
[6] continuing to operate, the energy storage system upper computer monitoring real-time information parameters of each battery string and all the battery cells in the energy storage system in real-time by using the battery string monitoring management module in the battery string direct current bus and string balancing management control device and each battery module unit cell detection and sampling module, and performing battery string electrical energy balancing regulation according to a degree of inconsistency between the corresponding battery strings and based on a comparison against the pre-configured operation assurance parameters of the energy storage system, i.e., during charging, controlling the battery string direct current power line connection/disconnection and protection circuit corresponding to a battery string of which electric energy is higher than an average value of all the battery strings and of which an inconsistency deviation is higher than an operation assurance requirement, to open to stop charging, and then when the electric energy of the battery string is lower than the average value of all the battery strings and the inconsistency deviation falls within an operation assurance requirement range, controlling the corresponding battery string direct current power line connection/disconnection and protection circuit to close to continue charging, and performing [1];
[7] continuing to operate, the energy storage system upper computer monitoring real-time information parameters of each battery string and all the battery cells in the energy storage system in real-time by using the battery string monitoring management module in the battery string direct current bus and string balancing management control device and each battery module unit cell detection and sampling module, and performing battery string electrical energy balancing regulation according to a degree of inconsistency between the corresponding battery strings and based on a comparison against the pre-configured operation assurance parameters of the energy storage system, i.e., during discharging, controlling the battery string direct current power line connection/disconnection and protection circuit corresponding to a battery string of which electric energy is lower than an average value of all the battery strings and of which an inconsistency deviation is lower than an operation assurance requirement, to open to stop discharging, and then when the electric energy and parameter of the battery string is higher than the average value of all the battery strings and the inconsistency deviation falls within an operation assurance requirement range, controlling the corresponding battery string direct current power line connection/disconnection and protection circuit to close to continue discharging, and performing [1]; and
when a dangerous parameter is detected after the battery energy storage BMS system enabling dual path-based information sampling and detection and protection control is normally turned on, the battery module unit cell detection and sampling module directly driving and controlling to disconnect a direct current power path of the corresponding battery string; when detecting that a required value range of the operation assurance parameter is exceeded, the battery string monitoring management module determining a dual-path control policy for regulation, and the energy storage system upper computer performing control and cyclically performing [1] to [7], to disconnect in real-time the power path corresponding to the battery string of which the electric energy is higher than an average value of all the battery strings during charging or lower than the average value during discharging and of which an inconsistency deviation is greater than a required value of the pre-configured operation assurance parameter of the energy storage system, and to connect the corresponding power path when a balance is achieved and a normal operation condition parameter value is reached, so that the electric quantities of the battery strings are balanced and meet a consistency requirement, achieving the control of safe and efficient operation of the entire energy storage system.

In the battery energy storage BMS system enabling dual path-based information sampling and detection and protection control, the battery string monitoring management module is characterized by mainly including a battery string monitoring management module bus, an embedded processor, a regulation policy and parameter module, a data memory, a power circuit, a communication processing circuit, an operation processing circuit, a clock circuit, and an insulation detection circuit, where
the embedded processor is respectively connected to the regulation policy and parameter module, the data memory, the power circuit, the communication processing circuit, the operation processing circuit, the clock circuit, and the insulation detection circuit by the battery string monitoring management module bus, to form an information link for monitoring management of the battery strings and data processing and control.

In the battery energy storage BMS system enabling dual path-based information sampling and detection and protection control, the battery module unit cell detection and sampling module is characterized by mainly including a monitoring and sampling module bus, an embedded processor, a data memory, a clock circuit, a power circuit, a communication processing circuit, a control drive circuit, a voltage sampling circuit, a current sampling circuit, a temperature sampling circuit, and an insulation detection circuit, wherein
the embedded processor is respectively connected to the data memory, the clock circuit, the power circuit, the communication processing circuit, the control drive circuit, the voltage sampling circuit, the current sampling circuit, the temperature sampling circuit, and the insulation detection circuit by the monitoring and sampling module bus, to form a management link for battery module unit cell detection and sampling.

The present invention relates to the technical field of electrochemical battery energy storage system applications, and particularly relates to a battery energy storage BMS system enabling dual path-based information sampling and detection and protection control. Each battery module unit cell detection and sampling module of a battery string monitoring management module in a battery string direct current bus and string balancing management control device acquires electrical parameters, such as voltage, current, and electric quantity, and a temperature parameter of each battery string and all battery cells in real-time, and compares the same against pre-configured operation assurance parameters of an energy storage system so as to perform string-level electrical energy balancing. Upon detecting that a parameter of a unit battery has reached a preset hazardous state parameter range, a corresponding battery module unit cell detection and sampling module directly drives a corresponding battery string direct current power line connection/disconnection and protection circuit to disconnect a power path connecting a corresponding battery string to a battery string direct current busbar. The present invention greatly reduces the risks caused by the configuration of numerous battery cell balancing electronic circuits and current loops, and saves investment costs while significantly the safety of the energy storage system.

### BRIEF DESCRIPTION OF THE DRAWINGS

FIG. 1 is a schematic diagram illustrating composition and principles of a battery energy storage BMS system enabling dual path-based information sampling and detection and protection control.
FIG. 2 is a schematic diagram illustrating composition and principles of a battery string monitoring management module.
FIG. 3 is a schematic diagram illustrating composition and principles of a battery module unit cell detection and sampling module.

### DETAILED DESCRIPTION

A battery string unit module and monitoring management system are described through embodiments with reference to the accompanying drawings. However, the described embodiments are part of the embodiments of the present invention, not all of the embodiments. All other embodiments obtained by a person of ordinary skill in the art based on the embodiments of the present invention without creative effects shall fall within the protection scope of the present invention. The technologies and solutions of the present invention are not limited to the contents given in the embodiments.

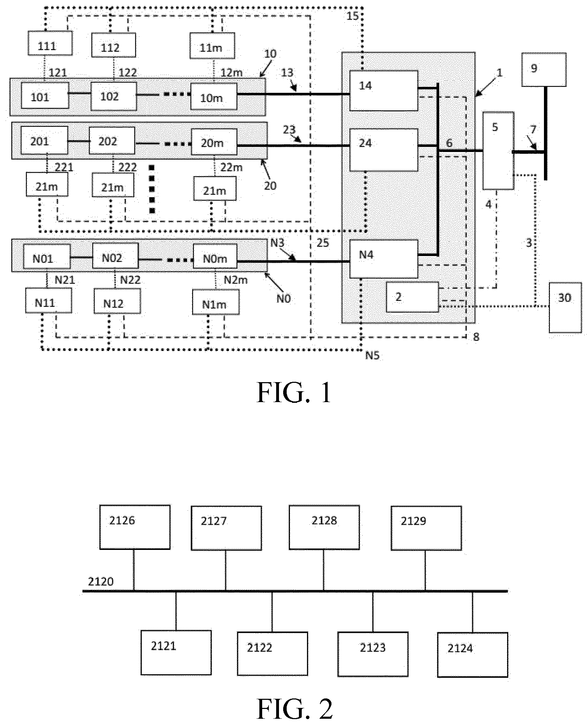

As shown in FIG. 1, a battery energy storage BMS system enabling dual path-based information sampling and detection and protection control mainly includes: a battery string direct current bus and string balancing management control device (1), a battery string monitoring management module (2), an upper computer communication line (3), a bidirectional energy storage converter communication line (4), a bidirectional energy storage converter (5), a battery string direct current busbar (6), a bidirectional energy storage converter alternating current power line (7), a battery string monitoring management module sampling and control information bus (8), a power grid (9), an energy storage system upper computer (30), a first battery string first battery module (101), a first battery string second battery module (102), a first battery string m-th battery module (10m), a first battery string first battery module unit cell detection and sampling module (111), a first battery string second battery module unit cell detection and sampling module (112), a first battery string m-th battery module unit cell detection and sampling module (11m), a first battery string first battery module information acquisition wiring harness (121), a first battery string second battery module information acquisition wiring harness (122), a first battery string m-th battery module information acquisition wiring harness (12m), a first battery string direct current power line (13), a first battery string direct current power line connection/disconnection and protection circuit (14), a first battery string fast protection control path (15), a second battery string first battery module (201), a second battery string second battery module (202), a second battery string m-th battery module (20m), a second battery string first battery module unit cell detection and sampling module (211), a second battery string second battery module unit cell detection and sampling module (212), a second battery string m-th battery module unit cell detection and sampling module (21m), a second battery string first battery module information acquisition wiring harness (221), a first battery string second battery module information acquisition wiring harness (222), a second battery string m-th battery module information acquisition wiring harness (22m), a second battery string direct current power line (23), a second battery string direct current power line connection/disconnection and protection circuit (24), a second battery string fast protection control path (25), an N-th battery string first battery module (N01), an N-th battery string second battery module (N02), an N-th battery string m-th battery module (N0m), an N-th battery string first battery module unit cell detection and sampling module (N11), an N-th battery string second battery module unit cell detection and sampling module (N12), an N-th battery string m-th battery module unit cell detection and sampling module (N1m), an N-th battery string first battery module information acquisition wiring harness (N21), an N-th battery string second battery module information acquisition wiring harness (N22), an N-th battery string m-th battery module information acquisition wiring harness (N2m), an N-th battery string direct current power line (N3), an N-th battery string direct current power line connection/disconnection and protection circuit (N4), and an N-th battery string fast protection control path (N5), where:
the first battery string direct current power line connection/disconnection and protection circuit (14), the second battery string direct current power line connection/disconnection and protection circuit (24), the N-th battery string direct current power line connection/disconnection and protection circuit (N4), the battery string direct current busbar (6), and the battery string monitoring management module (2) are mounted in a cabinet and form the battery string direct current bus and string balancing management control device (1) to perform battery string electrical energy balancing and safety protection connection/disconnection control;
positive and negative electrodes of every neighboring two of the first battery string first battery module (101), the first battery string second battery module (102), and the first battery string m-th battery module (10m) are connected in series to form a first battery string (10);
positive and negative electrodes of every neighboring two of the second battery string first battery module (201), the second battery string second battery module (202), and the second battery string m-th battery module (20m) are connected in series to form a second battery string (20);
positive and negative electrodes of every neighboring two of the N-th battery string first battery module (N01), the N-th battery string second battery module (N02), and the N-th battery string m-th battery module (N0m) are connected in series to form an N-th battery string (N0);
the first battery string first battery module unit cell detection and sampling module (111), the first battery string second battery module unit cell detection and sampling module (112), and the first battery string m-th battery module unit cell detection and sampling module (11m) are respectively connected to every corresponding unit battery in the first battery string first battery module (101), the first battery string second battery module (102), and the first battery string m-th battery module (10m) by the first battery string first battery module information acquisition wiring harness (121), the first battery string second battery module information acquisition wiring harness (122), and the first battery string m-th battery module information acquisition wiring harness (12m), are connected to the battery string monitoring management module (2) by the battery string monitoring management module sampling and control information bus (8) to form an information sampling and detection communication path for all unit batteries in the first battery string, and are connected to the first battery string direct current power line connection/disconnection and protection circuit (14) by the first battery string fast protection control path (15) to form a real-time monitoring and fast protection direct drive control path for the first battery string (10);
the second battery string first battery module unit cell detection and sampling module (211), the second battery string second battery module unit cell detection and sampling module (212), and the second battery string m-th battery module unit cell detection and sampling module (21m) are respectively connected to every corresponding unit battery in the second battery string first battery module (201), the second battery string second battery module (202), and the second battery string m-th battery module (20m) by the second battery string first battery module information acquisition wiring harness (221), the second battery string second battery module information acquisition wiring harness (222), and the second battery string m-th battery module information acquisition wiring harness (22m), are connected to the battery string monitoring management module (2) by the battery string monitoring management module sampling and control information bus (8) to form an information sampling and detection communication path for all unit batteries in the second battery string, and are connected to the second battery string direct current power line connection/disconnection and protection circuit (24) by the second battery string fast protection control path (25) to form a real-time monitoring and fast protection direct drive control path for the second battery string (20);
the N-th battery string first battery module unit cell detection and sampling module (N11), the N-th battery string second battery module unit cell detection and sampling module (N12), and the N-th battery string m-th battery module unit cell detection and sampling module (N1m) are respectively connected to every corresponding unit battery in the N-th battery string first battery module (N01), the N-th battery string second battery module (N02), and the N-th battery string m-th battery module (NOm) by the N-th battery string first battery module information acquisition wiring harness (N21), the N-th battery string second battery module information acquisition wiring harness (N22), and the N-th battery string m-th battery module information acquisition wiring harness (N2m), are connected to the battery string monitoring management module (2) by the battery string monitoring management module sampling and control information bus (8) to form an information sampling and detection communication path for all unit batteries in the N-th battery string, and are connected to the N-th battery string direct current power line connection/disconnection and protection circuit (N4) by the N-th battery string fast protection control path (N5) to form a real-time monitoring and fast protection direct drive control path for the N-th battery string (N0);
the first battery string (10) is connected to the first battery string direct current power line connection/disconnection and protection circuit (14) by the first battery string direct current power line (13), and is connected from the first battery string direct current power line connection/disconnection and protection circuit (14) sequentially through the battery string direct current busbar (6), the bidirectional energy storage converter (5), and the bidirectional energy storage converter alternating current power line (7), to the power grid (9) to form a power path for charging and discharging of the first battery string (10);
the second battery string (20) is connected to the second battery string direct current power line connection/disconnection and protection circuit (24) by the second battery string direct current power line (23), and is connected from the second battery string direct current power line connection/disconnection and protection circuit (24) sequentially through the battery string direct current busbar (6), the bidirectional energy storage converter (5), and the bidirectional energy storage converter alternating current power line (7), to the power grid (9) to form a power path for charging and discharging of the second battery string (20);
the N-th battery string (N0) is connected to the N-th battery string direct current power line connection/disconnection and protection circuit (N4) by the N-th battery string direct current power line (N3), and is connected from the N-th battery string direct current power line connection/disconnection and protection circuit (N4) sequentially through the battery string direct current busbar (6), the bidirectional energy storage converter (5), and the bidirectional energy storage converter alternating current power line (7), to the power grid (9) to form a power path for charging and discharging of the N-th battery string (N0);
the battery string monitoring management module (2) is respectively connected to the first battery string first battery module unit cell detection and sampling module (111), the first battery string second battery module unit cell detection and sampling module (112), the first battery string m-th battery module unit cell detection and sampling module (11m), the second battery string first battery module unit cell detection and sampling module (211), the second battery string second battery module unit cell detection and sampling module (212), the second battery string m-th battery module unit cell detection and sampling module (21m), the N-th battery string first battery module unit cell detection and sampling module (N11), the N-th battery string second battery module unit cell detection and sampling module (N12), the N-th battery string m-th battery module unit cell detection and sampling module (N1m), the first battery string direct current power line connection/disconnection and protection circuit (14), the second battery string direct current power line connection/disconnection and protection circuit (24), and the N-th battery string direct current power line connection/disconnection and protection circuit (N4) by the battery string monitoring management module sampling and control information bus (8), to form a communication link for real-time monitoring of each battery string and all battery cells in the entire energy storage system and management and control of battery string electrical energy balancing;
the battery string monitoring management module (2) is connected to the bidirectional energy storage converter (5) by the bidirectional energy storage converter communication line (4) to form an auxiliary control link for the battery string monitoring management module (2) to manage and control the bidirectional energy storage converter (5) to perform power regulation in battery charging and discharging and battery string electric quantity balancing;
the energy storage system upper computer (30) is connected to the battery string monitoring management module (2) by the upper computer communication line (3), to form a regulation communication link for the energy storage system upper computer (30) to use the battery string monitoring management module (2) to monitor and control the battery string charging and discharging in real-time; and
the energy storage system upper computer (30) is connected to the bidirectional energy storage converter (5) by the upper computer communication line (3), to form a control link for the energy storage system upper computer (30) to regulate charging and discharging of the bidirectional energy storage converter (5).

A method for controlling operation of a battery energy storage BMS system enabling dual path-based information sampling and detection and protection control is as follows:
[1] in a process in which a battery energy storage BMS system enabling dual path-based information sampling and detection and protection control is powered on and operates, each battery module unit cell detection and sampling module of a battery string monitoring management module (2) in a battery string direct current bus and string balancing management control device (1) and an energy storage system upper computer (30) simultaneously monitoring each battery string and all battery cells in real-time;
[2] when the BMS system is abnormal, giving an alarm and stopping running;
[3] when the BMS system is normal and each battery module unit cell detection and sampling module detects that parameters of one or more unit batteries do not reach a preset hazardous state parameter range, performing [4]; otherwise, the corresponding battery module unit cell detection and sampling module immediately disconnecting, through the corresponding battery string direct current power line connection/disconnection and protection circuit connected to the corresponding battery string fast protection control path, a power path connecting the corresponding battery string to the battery string direct current busbar (6) so that the power path of the corresponding battery string is in a disconnected and maintenance state, at the same time, the corresponding battery module unit cell detection and sampling module giving corresponding alarm information, and when the parameter of the corresponding unit battery no longer falls within the preset hazardous state parameter range, performing [4];
[4] each battery module unit cell detection and sampling module of the battery string monitoring management module (2) in the battery string direct current bus and string balancing management control device (1) monitoring, in real-time, information parameters including a voltage, current, temperature and a calculated stored electric quantity of each battery string and all the battery cells in the energy storage system, comparing consistency between the parameters of the battery cells of the battery strings, comparing the information parameters against pre-configured operation assurance parameters of the energy storage system, and when detecting that the pre-configured operation assurance parameters of the energy storage system are not met, giving alarm information to a bidirectional energy storage converter (5) and the energy storage system upper computer (30), and at the same time controlling, according to a parameter condition set by the energy storage system, connection/disconnection of the corresponding battery string direct current power line connection/disconnection and protection circuit in the battery string direct current bus and string balancing management control device (1) and correspondingly regulating charging and discharging powers of the bidirectional energy storage converter (5);
[5] when the pre-configured operation assurance parameters of the energy storage system are met, the energy storage system upper computer (30) monitoring in real-time, according to a power demand of the power grid (9) and by using the battery string monitoring management module (2) in the battery string direct current bus and string balancing management control device (1) and each battery module unit cell detection and sampling module, real-time information parameters of each battery string and all the battery cells in the energy storage system, and controlling the charging and discharging powers of the bidirectional energy storage converter (5) according to regulation policy preset by the energy storage system, where [6] is performed in a case of charging and [7] is performed in a case of discharging;
[6] continuing to operate, the energy storage system upper computer (30) monitoring real-time information parameters of each battery string and all the battery cells in the energy storage system in real-time by using the battery string monitoring management module (2) in the battery string direct current bus and string balancing management control device (1) and each battery module unit cell detection and sampling module, and performing battery string electrical energy balancing regulation according to a degree of inconsistency between the corresponding battery strings and based on a comparison against the pre-configured operation assurance parameters of the energy storage system, i.e., during charging, controlling the battery string direct current power line connection/disconnection and protection circuit corresponding to a battery string of which electric energy is higher than an average value of all the battery strings and of which an inconsistency deviation is higher than an operation assurance requirement, to open to stop charging, and then when the electric energy of the battery string is lower than the average value of all the battery strings and the inconsistency deviation falls within an operation assurance requirement range, controlling the corresponding battery string direct current power line connection/disconnection and protection circuit to close to continue charging, and performing [1];
[7] continuing to operate, the energy storage system upper computer (30) monitoring real-time information parameters of each battery string and all the battery cells in the energy storage system in real-time by using the battery string monitoring management module (2) in the battery string direct current bus and string balancing management control device (1) and each battery module unit cell detection and sampling module, and performing battery string electrical energy balancing regulation according to a degree of inconsistency between the corresponding battery strings and based on a comparison against the pre-configured operation assurance parameters of the energy storage system, i.e., during discharging, controlling the battery string direct current power line connection/disconnection and protection circuit corresponding to a battery string of which electric energy is lower than an average value of all the battery strings and of which an inconsistency deviation is lower than an operation assurance requirement, to open to stop discharging, and then when the electric energy and parameter of the battery string is higher than the average value of all the battery strings and the inconsistency deviation falls within an operation assurance requirement range, controlling the corresponding battery string direct current power line connection/disconnection and protection circuit to close to continue discharging, and performing [1]; and
when a dangerous state parameter is detected after the battery energy storage BMS system enabling dual path-based information sampling and detection and protection control is normally turned on, the battery module unit cell detection and sampling module directly driving and controlling to disconnect a direct current power path of the corresponding battery string; when detecting that a required value range of the operation assurance parameter is exceeded, the battery string monitoring management module (2) determining a dual-path control policy for regulation, and the energy storage system upper computer (30) performing control and cyclically performing [1] to [7], to disconnect in real-time the power path corresponding to the battery string of which the electric energy is higher than an average value of all the battery strings during charging or lower than the average value during discharging and of which an inconsistency deviation is greater than a required value of the pre-configured operation assurance parameter of the energy storage system, and to connect the corresponding power path when a balance is achieved and a normal operation condition parameter value is reached, so that the electric quantities of the battery strings are balanced and meet a consistency requirement, achieving the control of safe and efficient operation of the entire energy storage system.

As shown in FIG. 2, in a battery energy storage BMS system enabling dual path-based information sampling and detection and protection control, the battery string monitoring management module is characterized by mainly including a battery string monitoring management module bus (2120), an embedded processor (2121), a regulation policy and parameter module (2122), a data memory (2123), a power circuit (2124), a communication processing circuit (2126), an operation processing circuit (2127), a clock circuit (2128), and an insulation detection circuit (2129), where
the embedded processor (2121) is respectively connected to the regulation policy and parameter module (2122), the data memory (2123), the power circuit (2124), the communication processing circuit (2126), the operation processing circuit (2127), the clock circuit (2128), and the insulation detection circuit (2129) by the battery string monitoring management module bus (2120), to form an information link for monitoring management of the battery strings and data processing and control.

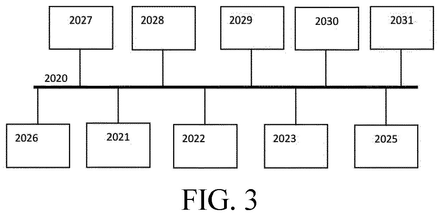

As shown in FIG. 3, in a battery energy storage BMS system enabling dual path-based information sampling and detection and protection control, the battery module unit cell detection and sampling module is characterized by mainly including a monitoring and sampling module bus (2020), an embedded processor (2021), a data memory (2022), a clock circuit (2023), a power circuit (2024), a communication processing circuit (2026), a control drive circuit (2027), a voltage sampling circuit (2028), a current sampling circuit (2029), a temperature sampling circuit (2030), and an insulation detection circuit (1031), where
the embedded processor (2021) is respectively connected to the data memory (2022), the clock circuit (2023), the power circuit (2024), the communication processing circuit (2026), the control drive circuit (2027), the voltage sampling circuit (2028), the current sampling circuit (2029), the temperature sampling circuit (2030), and the insulation detection circuit (1031) by the monitoring and sampling module bus (2020), to form a management link for battery module unit cell detection and sampling.

The present invention relates to the technical field of electrochemical battery energy storage system applications, and particularly relates to a battery energy storage BMS system enabling dual path-based information sampling and detection and protection control. Each battery module unit cell detection and sampling module of a battery string monitoring management module (2) in a battery string direct current bus and string balancing management control device (1) acquires electrical parameters, such as voltage, current, and electric quantity, and a temperature parameter of each battery string and all battery cells in real-time, and compares the same against pre-configured operation assurance parameters of an energy storage system so as to perform string-level electrical energy balancing. Upon detecting that a parameter of a unit battery has reached a preset hazardous state parameter range, a corresponding battery module unit cell detection and sampling module directly drives a corresponding battery string direct current power line connection/disconnection and protection circuit to disconnect a power path connecting a corresponding battery string to a battery string direct current busbar (6). The present invention greatly reduces the risks caused by the configuration of numerous battery cell balancing electronic circuits and current loops, and saves investment costs while significantly improving the safety of the energy storage system.

Finally, it should be noted that the foregoing embodiments are merely used for describing the technical solutions of the present invention, but are not intended to limit the present invention. Although the present invention is described in detail with reference to the foregoing embodiments, it should be appreciated by a person skilled in the art that, modifications may still be made to the technical solutions recorded in the foregoing embodiments, or equivalent replacements may be made to the part of all of the technical features; and these modifications or replacements will not cause the essence of corresponding technical solutions to depart from the scope of the technical solutions in the embodiments of the present invention.

## Claims

1. A battery energy storage BMS system enabling dual path-based information sampling and detection and protection control, **characterized by** comprising: a battery string direct current bus and string balancing management control device (1), a bidirectional energy storage converter (5), a power grid (9), an energy storage system upper computer (30), and at least two battery strings, wherein each of the battery strings comprises at least two battery modules, the battery modules in the same battery string are connected to each other, a battery module unit cell detection and sampling module is configured for each of the battery modules, the battery modules and the battery module unit cell detection and sampling modules are connected to the battery string direct current bus and string balancing management control device (1) by wires, the battery string direct current bus and string balancing management control device (1) is configured to perform battery string electrical energy balancing and safety protection connection/disconnection control, the battery string direct current bus and string balancing management control device (1) is respectively connected to the power grid (9) and the energy storage system upper computer (30), the bidirectional energy storage converter (5) is disposed on a wire between the power grid (9) and the battery string direct current bus and string balancing management control device (1), and the energy storage system upper computer (30) uses the battery string direct current bus and string balancing management control device (1) to monitor and control battery string charging and discharging in real-time.

2. The battery energy storage BMS system enabling dual path-based information sampling and detection and protection control according to claim 1, **characterized in that**, the battery string direct current bus and string balancing management control device (1) comprises a battery string monitoring management module (2) and at least two battery string direct current power line connection/disconnection and protection circuits, the number of the battery string direct current power line connection/disconnection and protection circuits is the same as the number of the battery strings, and one battery string direct current power line connection/disconnection and protection circuit is configured for each battery string.

3. The battery energy storage BMS system enabling dual path-based information sampling and detection and protection control according to claim 1, **characterized by** mainly comprising: a battery string direct current bus and string balancing management control device (1), a battery string monitoring management module (2), an upper computer communication line (3), a bidirectional energy storage converter communication line (4), a bidirectional energy storage converter (5), a battery string direct current busbar (6), a bidirectional energy storage converter alternating current power line (7), a battery string monitoring management module sampling and control information bus (8), a power grid (9), an energy storage system upper computer (30), a first battery string first battery module (101), a first battery string second battery module (102), a first battery string m-th battery module (10m), a first battery string first battery module unit cell detection and sampling module (111), a first battery string second battery module unit cell detection and sampling module (112), a first battery string m-th battery module unit cell detection and sampling module (11m), a first battery string first battery module information acquisition wiring harness (121), a first battery string second battery module information acquisition wiring harness (122), a first battery string m-th battery module information acquisition wiring harness (12m), a first battery string direct current power line (13), a first battery string direct current power line connection/disconnection and protection circuit (14), a first battery string fast protection control path (15), a second battery string first battery module (201), a second battery string second battery module (202), a second battery string m-th battery module (20m), a second battery string first battery module unit cell detection and sampling module (211), a second battery string second battery module unit cell detection and sampling module (212), a second battery string m-th battery module unit cell detection and sampling module (21m), a second battery string first battery module information acquisition wiring harness (221), a first battery string second battery module information acquisition wiring harness (222), a second battery string m-th battery module information acquisition wiring harness (22m), a second battery string direct current power line (23), a second battery string direct current power line connection/disconnection and protection circuit (24), a second battery string fast protection control path (25), an N-th battery string first battery module (N01), an N-th battery string second battery module (N02), an N-th battery string m-th battery module (N0m), an N-th battery string first battery module unit cell detection and sampling module (N11), an N-th battery string second battery module unit cell detection and sampling module (N12), an N-th battery string m-th battery module unit cell detection and sampling module (N1m), an N-th battery string first battery module information acquisition wiring harness (N21), an N-th battery string second battery module information acquisition wiring harness (N22), an N-th battery string m-th battery module information acquisition wiring harness (N2m), an N-th battery string direct current power line (N3), an N-th battery string direct current power line connection/disconnection and protection circuit (N4), and an N-th battery string fast protection control path (N5), wherein:
the first battery string direct current power line connection/disconnection and protection circuit (14), the second battery string direct current power line connection/disconnection and protection circuit (24), the N-th battery string direct current power line connection/disconnection and protection circuit (N4), the battery string direct current busbar (6), and the battery string monitoring management module (2) are mounted in a cabinet and form the battery string direct current bus and string balancing management control device (1) to perform battery string electrical energy balancing and safety protection connection/disconnection control;
positive and negative electrodes of every neighboring two of the first battery string first battery module (101), the first battery string second battery module (102), and the first battery string m-th battery module (10m) are connected in series to form a first battery string (10);
positive and negative electrodes of every neighboring two of the second battery string first battery module (201), the second battery string second battery module (202), and the second battery string m-th battery module (20m) are connected in series to form a second battery string (20);
positive and negative electrodes of every neighboring two of the N-th battery string first battery module (N01), the N-th battery string second battery module (N02), and the N-th battery string m-th battery module (NOm) are connected in series to form an N-th battery string (N0);
the first battery string first battery module unit cell detection and sampling module (111), the first battery string second battery module unit cell detection and sampling module (112), and the first battery string m-th battery module unit cell detection and sampling module (11m) are respectively connected to every corresponding unit battery in the first battery string first battery module (101), the first battery string second battery module (102), and the first battery string m-th battery module (10m) by the first battery string first battery module information acquisition wiring harness (121), the first battery string second battery module information acquisition wiring harness (122), and the first battery string m-th battery module information acquisition wiring harness (12m), are connected to the battery string monitoring management module (2) by the battery string monitoring management module sampling and control information bus (8) to form an information sampling and detection communication path for all unit batteries in the first battery string, and are connected to the first battery string direct current power line connection/disconnection and protection circuit (14) by the first battery string fast protection control path (15) to form a real-time monitoring and fast protection direct drive control path for the first battery string (10);
the second battery string first battery module unit cell detection and sampling module (211), the second battery string second battery module unit cell detection and sampling module (212), and the second battery string m-th battery module unit cell detection and sampling module (21m) are respectively connected to every corresponding unit battery in the second battery string first battery module (201), the second battery string second battery module (202), and the second battery string m-th battery module (20m) by the second battery string first battery module information acquisition wiring harness (221), the second battery string second battery module information acquisition wiring harness (222), and the second battery string m-th battery module information acquisition wiring harness (22m), are connected to the battery string monitoring management module (2) by the battery string monitoring management module sampling and control information bus (8) to form an information sampling and detection communication path for all unit batteries in the second battery string, and are connected to the second battery string direct current power line connection/disconnection and protection circuit (24) by the second battery string fast protection control path (25) to form a real-time monitoring and fast protection direct drive control path for the second battery string (20);
the N-th battery string first battery module unit cell detection and sampling module (N11), the N-th battery string second battery module unit cell detection and sampling module (N12), and the N-th battery string m-th battery module unit cell detection and sampling module (N1m) are respectively connected to every corresponding unit battery in the N-th battery string first battery module (N01), the N-th battery string second battery module (N02), and the N-th battery string m-th battery module (NOm) by the N-th battery string first battery module information acquisition wiring harness (N21), the N-th battery string second battery module information acquisition wiring harness (N22), and the N-th battery string m-th battery module information acquisition wiring harness (N2m), are connected to the battery string monitoring management module (2) by the battery string monitoring management module sampling and control information bus (8) to form an information sampling and detection communication path for all unit batteries in the N-th battery string, and are connected to the N-th battery string direct current power line connection/disconnection and protection circuit (N4) by the N-th battery string fast protection control path (N5) to form a real-time monitoring and fast protection direct drive control path for the N-th battery string (N0);
the first battery string (10) is connected to the first battery string direct current power line connection/disconnection and protection circuit (14) by the first battery string direct current power line (13), and is connected from the first battery string direct current power line connection/disconnection and protection circuit (14) sequentially through the battery string direct current busbar (6), the bidirectional energy storage converter (5), and the bidirectional energy storage converter alternating current power line (7), to the power grid (9) to form a power path for charging and discharging of the first battery string (10);
the second battery string (20) is connected to the second battery string direct current power line connection/disconnection and protection circuit (24) by the second battery string direct current power line (23), and is connected from the second battery string direct current power line connection/disconnection and protection circuit (24) sequentially through the battery string direct current busbar (6), the bidirectional energy storage converter (5), and the bidirectional energy storage converter alternating current power line (7), to the power grid (9) to form a power path for charging and discharging of the second battery string (20);
the N-th battery string (N0) is connected to the N-th battery string direct current power line connection/disconnection and protection circuit (N4) by the N-th battery string direct current power line (N3), and is connected from the N-th battery string direct current power line connection/disconnection and protection circuit (N4) sequentially through the battery string direct current busbar (6), the bidirectional energy storage converter (5), and the bidirectional energy storage converter alternating current power line (7), to the power grid (9) to form a power path for charging and discharging of the N-th battery string (N0);
the battery string monitoring management module (2) is respectively connected to the first battery string first battery module unit cell detection and sampling module (111), the first battery string second battery module unit cell detection and sampling module (112), the first battery string m-th battery module unit cell detection and sampling module (11m), the second battery string first battery module unit cell detection and sampling module (211), the second battery string second battery module unit cell detection and sampling module (212), the second battery string m-th battery module unit cell detection and sampling module (21m), the N-th battery string first battery module unit cell detection and sampling module (N11), the N-th battery string second battery module unit cell detection and sampling module (N12), the N-th battery string m-th battery module unit cell detection and sampling module (N1m), the first battery string direct current power line connection/disconnection and protection circuit (14), the second battery string direct current power line connection/disconnection and protection circuit (24), and the N-th battery string direct current power line connection/disconnection and protection circuit (N4) by the battery string monitoring management module sampling and control information bus (8), to form a communication link for real-time monitoring of each battery string and all battery cells in the entire energy storage system and management and control of battery string electrical energy balancing;
the battery string monitoring management module (2) is connected to the bidirectional energy storage converter (5) by the bidirectional energy storage converter communication line (4) to form an auxiliary control link for the battery string monitoring management module (2) to manage and control the bidirectional energy storage converter (5) to perform power regulation in battery charging and discharging and battery string electric quantity balancing;
the energy storage system upper computer (30) is connected to the battery string monitoring management module (2) by the upper computer communication line (3), to form a regulation communication link for the energy storage system upper computer (30) to use the battery string monitoring management module (2) to monitor and control the battery string charging and discharging in real-time; and
the energy storage system upper computer (30) is connected to the bidirectional energy storage converter (5) by the upper computer communication line (3), to form a control link for the energy storage system upper computer (30) to regulate charging and discharging of the bidirectional energy storage converter (5).

4. The battery energy storage BMS system enabling dual path-based information sampling and detection and protection control according to claim 3, **characterized in that**, the battery string monitoring management module (2) mainly comprises a battery string monitoring management module bus (2120), an embedded processor (2121), a regulation policy and parameter module (2122), a data memory (2123), a power circuit (2124), a communication processing circuit (2126), an operation processing circuit (2127), a clock circuit (2128), and an insulation detection circuit (2129), wherein
the embedded processor (2121) is respectively connected to the regulation policy and parameter module (2122), the data memory (2123), the power circuit (2124), the communication processing circuit (2126), the operation processing circuit (2127), the clock circuit (2128), and the insulation detection circuit (2129) by the battery string monitoring management module bus (2120), to form an information link for monitoring management of the battery strings and data processing and control.

5. The battery energy storage BMS system enabling dual path-based information sampling and detection and protection control according to claim 3, **characterized in that**, the battery module unit cell detection and sampling module mainly comprises a monitoring and sampling module bus (2020), an embedded processor (2021), a data memory (2022), a clock circuit (2023), a power circuit (2024), a communication processing circuit (2026), a control drive circuit (2027), a voltage sampling circuit (2028), a current sampling circuit (2029), a temperature sampling circuit (2030), and an insulation detection circuit (1031), wherein
the embedded processor (2021) is respectively connected to the data memory (2022), the clock circuit (2023), the power circuit (2024), the communication processing circuit (2026), the control drive circuit (2027), the voltage sampling circuit (2028), the current sampling circuit (2029), the temperature sampling circuit (2030), and the insulation detection circuit (1031) by the monitoring and sampling module bus (2020), to form a management link for battery module unit cell detection and sampling.

6. A method for controlling operation of a battery energy storage BMS system enabling dual path-based information sampling and detection and protection control, comprising:
[1] in a process in which a battery energy storage BMS system enabling dual path-based information sampling and detection and protection control is powered on and operates, each battery module unit cell detection and sampling module of a battery string monitoring management module (2) in a battery string direct current bus and string balancing management control device (1) and an energy storage system upper computer (30) simultaneously monitoring each battery string and all battery cells in real-time;
[2] when the BMS system is abnormal, giving an alarm and stopping running;
[3] when the BMS system is normal and each battery module unit cell detection and sampling module detects that parameters of one or more unit batteries do not reach a preset hazardous state parameter range, performing [4]; otherwise, the corresponding battery module unit cell detection and sampling module implementing, through the corresponding battery string direct current power line connection/disconnection and protection circuit connected to the corresponding battery string fast protection control path, control and immediately disconnecting a power path connecting the corresponding battery string to the battery string direct current busbar (6) so that the power path of the corresponding battery string is in a disconnected and maintenance state, at the same time, the corresponding battery module unit cell detection and sampling module giving corresponding alarm information, and when the parameter of the corresponding unit battery no longer falls within the preset hazardous state parameter range, performing [4];
[4] each battery module unit cell detection and sampling module of the battery string monitoring management module (2) in the battery string direct current bus and string balancing management control device (1) monitoring, in real-time, information parameters comprising a voltage, current, temperature and a calculated stored electric quantity of each battery string and all the battery cells in the energy storage system, comparing consistency between the parameters of the battery cells of the battery strings, comparing the information parameters against pre-configured operation assurance parameters of the energy storage system, and when detecting that the pre-configured operation assurance parameters of the energy storage system are not met, giving alarm information to a bidirectional energy storage converter (5) and the energy storage system upper computer (30), and at the same time controlling, according to a parameter condition set by the energy storage system, connection/disconnection of the corresponding battery string direct current power line connection/disconnection and protection circuit in the battery string direct current bus and string balancing management control device (1) and correspondingly regulating charging and discharging powers of the bidirectional energy storage converter (5);
[5] when the pre-configured operation assurance parameters of the energy storage system are met, the energy storage system upper computer (30) monitoring in real-time, according to a power demand of the power grid (9) and by using the battery string monitoring management module (2) in the battery string direct current bus and string balancing management control device (1) and each battery module unit cell detection and sampling module, real-time information parameters of each battery string and all the battery cells in the energy storage system, and controlling the charging and discharging powers of the bidirectional energy storage converter (5) according to regulation policy preset by the energy storage system, wherein [6] is performed in a case of charging and [7] is performed in a case of discharging;
[6] continuing to operate, the energy storage system upper computer (30) monitoring real-time information parameters of each battery string and all the battery cells in the energy storage system in real-time by using the battery string monitoring management module (2) in the battery string direct current bus and string balancing management control device (1) and each battery module unit cell detection and sampling module, and performing battery string electrical energy balancing regulation according to a degree of inconsistency between the corresponding battery strings and based on a comparison against the pre-configured operation assurance parameters of the energy storage system, i.e., during charging, controlling the battery string direct current power line connection/disconnection and protection circuit corresponding to a battery string of which electric energy is higher than an average value of all the battery strings and of which an inconsistency deviation is higher than an operation assurance requirement, to open to stop charging, and then when the electric energy of the battery string is lower than the average value of all the battery strings and the inconsistency deviation falls within an operation assurance requirement range, controlling the corresponding battery string direct current power line connection/disconnection and protection circuit to close to continue charging, and performing [1];
[7] continuing to operate, the energy storage system upper computer (30) monitoring real-time information parameters of each battery string and all the battery cells in the energy storage system in real-time by using the battery string monitoring management module (2) in the battery string direct current bus and string balancing management control device (1) and each battery module unit cell detection and sampling module, and performing battery string electrical energy balancing regulation according to a degree of inconsistency between the corresponding battery strings and based on a comparison against the pre-configured operation assurance parameters of the energy storage system, i.e., during discharging, controlling the battery string direct current power line connection/disconnection and protection circuit corresponding to a battery string of which electric energy is lower than an average value of all the battery strings and of which an inconsistency deviation is lower than an operation assurance requirement, to open to stop discharging, and then when the electric energy and parameter of the battery string is higher than the average value of all the battery strings and the inconsistency deviation falls within an operation assurance requirement range, controlling the corresponding battery string direct current power line connection/disconnection and protection circuit to close to continue discharging, and performing [1]; and
when a dangerous state parameter is detected after the battery energy storage BMS system enabling dual path-based information sampling and detection and protection control is normally turned on, the battery module unit cell detection and sampling module directly driving and controlling to disconnect a direct current power path of the corresponding battery string; when detecting that a required value range of the operation assurance parameter is exceeded, the battery string monitoring management module (2) determining a dual-path control policy for regulation, and the energy storage system upper computer (30) performing control and cyclically performing [1] to [7], to disconnect in real-time the power path corresponding to the battery string of which the electric energy is higher than an average value of all the battery strings during charging or lower than the average value during discharging and of which an inconsistency deviation is greater than a required value of the pre-configured operation assurance parameter of the energy storage system, and to connect the corresponding power path when a balance is achieved and a normal operation condition parameter value is reached, so that the electric quantities of the battery strings are balanced and meet a consistency requirement, achieving the control of safe and efficient operation of the entire energy storage system.
